# EUROPÄISCHE PATENTSCHRIFT

(11) **EP 4 010 554 B1**
(45) Veröffentlichungstag und Bekanntmachung des Hinweises auf die Patenterteilung: **26.10.2022**
(21) Anmeldenummer: 20754694.6
(22) Anmeldetag: 05.08.2020
(51) Int. Cl.: E05D 15/06, F16B 7/04

(54) **SCHIEBETÜRBESCHLAG, MÖBEL UND VERFAHREN ZUR MONTAGE EINES SCHIEBETÜRBESCHLAGES**
SLIDING DOOR FITTING, ITEM OF FURNITURE, AND METHOD FOR ASSEMBLING A SLIDING DOOR FITTING
FERRURE DE PORTE COULISSANTE, MEUBLE ET PROCÉDÉ D'ASSEMBLAGE D'UNE FERRURE DE PORTE COULISSANTE

(30) Priorität: 08.08.2019 DE 102019121404
(43) Veröffentlichungstag der Anmeldung: 15.06.2022
(73) Patentinhaber: Hettich-Heinze GmbH & Co. KG, 32139 Spenge (DE)
(72) Erfinder: WARDA, Thomas, 32052 Herford (DE); WATERBÖR, Felix, 33613 Bielefeld (DE); BERGMANN, Frank, 32257 Bünde (DE); FLASPÖHLER, Dirk, 49124 Georgsmarienhütte (DE)
(74) Vertreter: Dantz, Jan Henning
(86) Internationale Anmeldenummer: PCT/EP2020/071999
(87) Internationale Veröffentlichungsnummer: WO 2021/023772

(56) Entgegenhaltungen:
- EP-A1- 2 815 136
- WO-A1-2006/118574
- DE-A1-102014 109 427
- DE-U1-202018 106 540
- US-A- 2 649 612
- US-A1- 2006 010 774

## Beschreibung

Die vorliegende Erfindung betrifft einen Schiebetürbeschlag mit einer aus mindestens zwei Schienenteilen gebildeten Laufschiene, an der mindestens eine Laufbahn für eine Laufrolle eines Laufteils zum Verfahren einer Schiebetür ausgebildet ist, wobei zwischen den Schienenteilen ein Profilstoßverbinder mit einem Verbindungsteil angeordnet ist, das einen Laufbahnabschnitt für die Laufrolle ausbildet, ein Möbel und ein Verfahren zur Montage eines Schiebetürbeschlages.

Die EP 2 815 136 B1 offenbart einen Schiebetürbeschlag mit einer aus zwei Schienenteilen gebildeten Laufschiene. In dem Stoßbereich der Schienenteile ist ein Profilverbinder vorgesehen, der auf der von der Laufbahn abgewandten Seite durch Einschwenken klemmend an einer Aufnahme fixiert ist. Ein solcher Schiebetürbeschlag hat sich an sich bewährt, allerdings kann es bei hohen Gewichtsbelastungen zu einem Absenken der Laufbahn kommen, so dass bei einem Überfahren des Verbindungsbereiches zwischen den beiden Schienenteilen eine kleine Stufe gebildet wird, die vom Benutzer wahrgenommen wird.

Um den Übergang zwischen zwei Schienenteilen bei einem Schiebetürbeschlag besser überbrücken zu können, wurde in der DE 20 2018 106 540 U1 ein Überbrückungsmittel vorgeschlagen, das eine Zusatzbahn aufweist. Dadurch kann eine Laufrolle zunächst entlang eines Schienenteils über eine Laufrolle verfahren werden, wobei die Laufrolle an dem Überbrückungsmittel in Eingriff mit einer versetzt angeordneten Zusatzbahn gelangt, und auf dieser verfahrbar ist, bis die Laufrolle das andere Schienenteil erreicht. Die Ausbildung einer Zusatzbahn neben der Laufbahn an dem Schienenteil vergrößert den notwendigen Bauraum. Ferner besteht der Nachteil, dass eine Montage der Schienenteile nur im zusammengesetzten Zustand erfolgen kann, so dass der Monteur eine nur vorfixierte zusammengesetzte Schiene großer Länge montieren muss, was vergleichsweise aufwändig ist.

Es ist daher Aufgabe der vorliegenden Erfindung, einen Schiebetürbeschlag und ein Verfahren zur Montage eines Schiebetürbeschlages zu schaffen, die eine verbesserte Abstützung der Schienenteile gewährleisten und zudem die Montage vereinfachen.

Diese Aufgabe wird mit einem Schiebetürbeschlag mit den Merkmalen des Anspruches 1 sowie einem Verfahren zur Montage eines Schiebetürbeschlages mit den Merkmalen des Anspruches 16 gelöst.

Der erfindungsgemäße Schiebetürbeschlag umfasst einen Profilstoßverbinder zwischen den beiden Schienenteilen, der ein Verbindungsteil aufweist, das einen Laufbahnabschnitt für die Laufrolle ausbildet, und ein Stützteil umfasst, das die beiden Schienenteile an einander zugewandten Enden stützt und an dem das Verbindungsteil fixiert ist. Dadurch kann der Übergangsbereich zwischen zwei Schienenteilen besser abgestützt werden, da das Stützteil die Schienenteile stützt, und zudem wird die Montage des Verbindungsteils vereinfacht, da dieses an dem Stützteil montiert werden kann. Dieser zweiteilige Aufbau ermöglicht eine optimierte Gestaltung des Profilstoßverbinders.

Vorzugsweise ist das Verbindungsteil über eine Steckverbindung an dem Stützteil fixiert und wird wahlweise eingeschoben, eingeschwenkt oder eingehangen, also werkzeuglos montiert. Dadurch kann der Monteur nach Montage der Schienenteile und des Stützteils das Verbindungsteil über die Steckverbindung fixieren, so dass der zusätzliche Montageaufwand für den mehrteiligen Profilstoßverbinder minimiert ist.

Das Stützteil weist vorzugsweise zwei beabstandete Auflageflächen auf, wobei an jeder Auflagefläche ein Schienenteil abgestützt ist. Die Auflagefläche kann eine Unterseite eines Schienenteils für eine solche Abstützung teilweise untergreifen.

In einer weiteren Ausgestaltung überbrückt das Verbindungsteil einen Spalt zwischen den beiden Schienenteilen mit dem Laufbahnabschnitt, wobei der Laufbahnabschnitt in Verlängerung der Laufbahn an den Schienenteilen angeordnet ist. Dadurch wird die Laufbahn an dem Verbindungsteil nicht versetzt weitergeführt durch einen benachbarten Laufbahnabschnitt, der zusätzlichen Bauraum erfordert, sondern der Laufbahnabschnitt an dem Verbindungsteil ist in Verlängerung der beiden Laufbahnen an den Schienenteilen angeordnet. Hierbei kann optional mindestens ein Schienenteil eine Aussparung oder Ausklinkung aufweisen, in die ein hervorstehendes Teil des Laufbahnabschnittes des Verbindungsteils eingefügt ist. Bei einer Ausklinkung kann das hervorstehende Teil des Laufbahnabschnittes durch das Schienenteil abgestützt werden. Bei einer Aussparung, die in vertikale Richtung durchgängig durch die Laufbahn vorgesehen ist, kann der Laufbahnabschnitt an dem Verbindungsteil besser in der Höhe ausgerichtet werden für eine optimale Führung der Laufrolle.

Für eine stabile Verbindung zwischen Verbindungsteil und den Schienenteilen kann das Verbindungsteil mindestens einen seitlichen Vorsprung, vorzugsweise an gegenüberliegenden Seiten mindestens einen seitlichen Vorsprung aufweisen, der ein Schienenteil an einem vertikalen Wandabschnitt zumindest teilweise überdeckt. Dadurch wird die Ausrichtung des Verbindungsteils verbessert.

Für eine einfache Montage kann das Stützteil über Befestigungsmittel an mindestens einem Schienenteil fixiert sein. Beispielsweise kann über die gleichen Befestigungsmittel ein Schienenteil und das Stützteil fixiert werden, insbesondere an gegenüberliegenden Seiten eines plattenförmigen Oberbodens.

Die beiden Schienenteile weisen vorzugsweise zwei Laufbahnen auf, die in der montierten Position vertikal versetzt zueinander angeordnet sind, insbesondere in vertikaler Richtung im Wesentlichen in der gleichen Ebene angeordnet sind. Dadurch kann der Schiebetürbeschlag in Tiefenrichtung kompakt aufgebaut werden.

In einer weiteren Ausgestaltung umfasst das Stützteil einen in der montierten Position vertikalen Wandabschnitt, an dem ein vertikaler Abschnitt jedes Schienenteils anliegt. Dadurch kann das Stützteil nicht nur an einer Unterseite die Schienenteile stützen, um eine Bewegung in vertikaler Richtung zu vermeiden, sondern auch eine Abstützung in horizontaler Richtung vornehmen, um ein Verschwenken der Schienenteile bei einer hohen Gewichtslast zu vermeiden.

Für eine einfache Montage kann an dem Stützteil eine Markierung oder ein Abstandshalter vorgesehen sein, damit die Schienenteile in einem vorbestimmten Abstand montiert werden können. Der Abstand entspricht dabei vorzugsweise einer Breite des Verbindungsteils, das dann zwischen die Stirnseiten der beiden Schienenteile eingefügt werden kann.

Für eine optimierte Ausrichtung kann das Verbindungsteil höhenverstellbar an dem Stützteil montiert sein. Dadurch kann die Laufbahn auch in dem Übergangsbereich an dem Verbindungsteil exakt positioniert werden. Der überbrückende Laufbahnabschnitt an dem Verbindungsteil kann dabei wahlweise linear und eben ausgebildet sein oder leicht nach oben gewölbt, so dass die Laufrolle beim Verfahren leicht angehoben wird.

Die Höhenverstellung des Verbindungsteils kann dabei zur Feinjustage zur Anpassung an unterschiedliche Türgewichte verwendet werden. Durch ein elastisches Biegeverhalten der Laufbahnen während des Überfahrens durch die Rolle können die Höhenverhältnisse am Verbindungsstoß je nach Türgewicht geringfügig variieren. Durch die Höhenverstellung kann somit bei der Erstmontage eine generelle Anpassung an das vorliegende Türgewicht oder eine Nachjustierung nach einem gewissen Setzverhalten der Bauteile nach mehrjähriger Verwendung erfolgen.

Erfindungsgemäß wird auch ein Möbel mit einem Schiebetürbeschlag bereitgestellt, wobei die Schienenteile vorzugsweise an einem Oberboden eines Möbelkorpus montiert sind. Hierfür kann der Oberboden eine Öffnung aufweisen, in die auf einer Seite eine Gewindehülse und auf der gegenüberliegenden Seite eine Schraube eingesteckt ist, die mit der Gewindehülse verschraubt ist. Durch diese Befestigungsmittel kann an der Unterseite das Stützteil und an der Oberseite des Oberbodens ein Schenkel eines Schienenteils fixiert werden. Bei beengten Platzverhältnissen kann die Gewindehülse an der Oberseite des Oberbodens eingesteckt werden, wobei optional die Gewindehülse auch an der Unterseite des Oberbodens eingesteckt werden kann. Alternativ kann das Stützteil anstatt auf der Unterseite des Oberbodens auch auf dessen Oberseite mit einem Abschnitt fixiert werden.

Bei dem erfindungsgemäßen Verfahren zur Montage eines Schiebetürbeschlages wird ein erstes Schienenteil an dem Oberboden fixiert, ein zweites Schienenteil an dem Oberboden fixiert, und ein Stützteil eines Profilstoßverbinders zwischen den Schienenteilen an dem Oberboden fixiert. Die Montagereihenfolge dieser Schritte ist dabei irrelevant, es kann somit auch das zweite Schienenteil vor dem ersten Schienenteil und das Stützteil vor dem zweiten Schienenteil montiert werden. In jedem Fall werden die Schienenteile einzeln als separate Bauteile an dem Oberboden fixiert und nicht als zusammengesteckte Baueinheit, was die Montage erheblich vereinfacht. Die Montage eines einzelnen Schienenteils am Oberboden und das spätere Zusammenfügen in der montierten Position erleichtert die Handhabung. In jedem Fall wird erst am Ende des Montagevorgangs das Verbindungsteil montiert, das eingeschoben, eingeschwenkt oder eingehängt wird, um an dem Stützteil zur Ausbildung einer durchgängigen Laufbahn für eine Laufrolle zwischen den beiden Schienenteilen fixiert zu werden.

Die Erfindung wird nachfolgend anhand mehrerer Ausführungsbeispiele mit Bezug auf die beigefügten Figuren näher erläutert. Es zeigen:
- Figuren 1A und 1B: zwei Ansichten eines Möbels mit einem erfindungsgemäßen Schiebetürbeschlag;
- Figur 2: eine perspektivische Explosionsdarstellung des erfindungsgemäßen Schiebetürbeschlages;
- Figur 3: eine perspektivische Ansicht des Schiebetürbeschlages der Figur 2 in der teilweise montierten Position;
- Figur 4: eine perspektivische Ansicht des Schiebetürbeschlages der Figur 2;
- Figur 5: eine perspektivische Ansicht des Schiebetürbeschlages der Figur 3 in der teilweise montierten Position;
- Figuren 6A und 6B: zwei Ansichten des Schiebetürbeschlages ohne ein Schienenteil;
- Figuren 7A und 7B: zwei Ansichten des Schiebetürbeschlages der Figur 6 in einer verstellten Position;
- Figuren 8A bis 8C: mehrere Ansichten eines Verbindungsteils des Schiebetürbeschlages;
- Figuren 9A und 9B: zwei Ansichten bei der Montage eines ersten Schienenteils;
- Figuren 10A und 10B: zwei Ansichten bei der Montage des zweiten Schienenteils;
- Figuren 11A bis 11C: drei Ansichten bei der Montage des Stützteils;
- Figuren 12A bis 12C: mehrere Ansichten bei der Montage und Ausrichtung des Verbindungsteils;
- Figur 13: eine perspektivische Ansicht des montierten Schiebetürbeschlages mit einem Laufteil;
- Figur 14: eine schematische Ansicht der Laufbahn mit Laufrollen in unterschiedlichen Positionen, und
- Figuren 15A bis 15C: mehrere Ansichten eines modifizierten Ausführungsbeispiels eines Schiebetürbeschlages.

Ein Möbel 1 umfasst einen Möbelkorpus 2, das schrankförmig ausgebildet ist und einen plattenförmigen Oberboden 20 aufweist, an dem eine Laufschiene 3 montiert ist. An der Laufschiene 3 sind Schiebetüren 21 verfahrbar gehalten. An einem Boden des Möbelkorpus 2 ist eine Führungsschiene 15 angeordnet, um die Schiebetüren 21 im unteren Bereich zu führen.

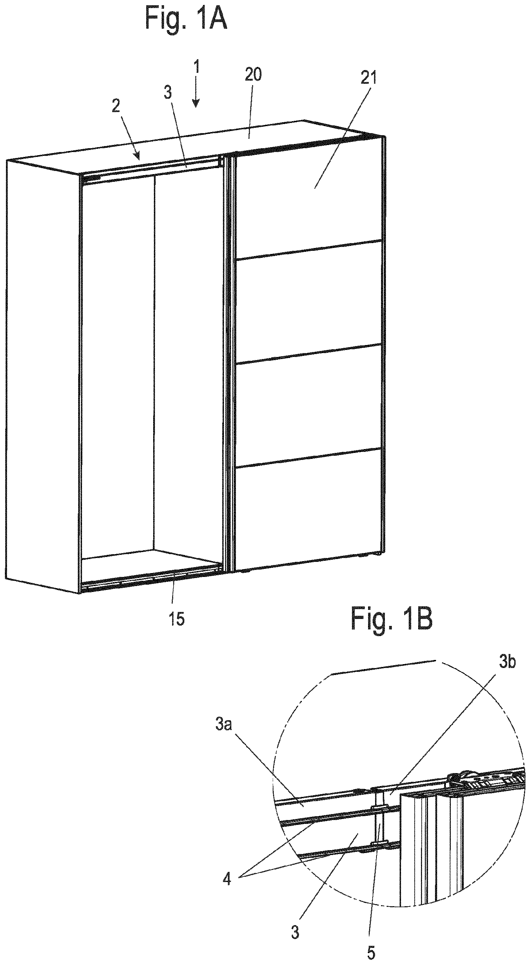

Wie aus der Detailansicht der Figur 1B hervorgeht, umfasst der Schiebetürbeschlag an dem Oberboden 20 zwei Schienenteile 3a und 3b, die zusammen die Laufschiene 3 bilden. Zwischen den Schienenteilen 3a und 3b ist ein Verbindungsteil 5 angeordnet, das einen Laufbahnabschnitt in Verlängerung der eigentlichen Laufbahn 4 ausbildet, entlang der Laufrollen eines Laufteils verfahrbar sind. Die beiden Laufbahnen 4 sind dabei in vertikaler Richtung übereinander angeordnet, können optional aber auch horizontal nebeneinander oder vertikal und horizontal versetzt zueinander positioniert werden.

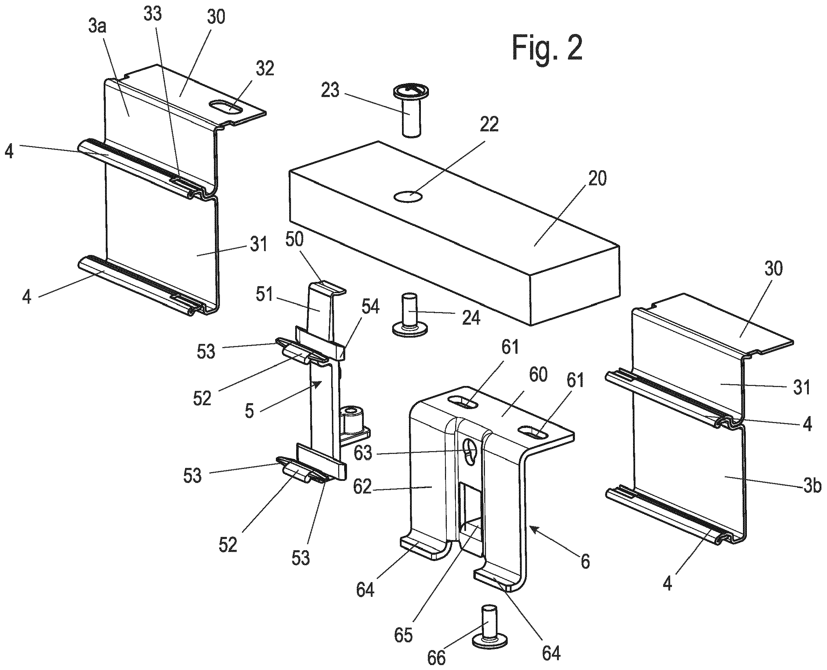

In Figur 2 ist der Schiebetürbeschlag an dem Oberboden 20 im Detail gezeigt. Der Schiebetürbeschlag umfasst ein erstes Schienenteil 3a und ein zweites Schienenteil 3b, die jeweils eine oder mehrere Laufbahnen 4 aufweisen, die in der montierten Position fluchtend zueinander angeordnet sind. Zwischen den beiden Schienenteilen 3a und 3b ist ein Profilstoßverbinder angeordnet, der ein Verbindungsteil 5 und ein Stützteil 6 umfasst. Das Stützteil 6 umfasst einen oberen winkelförmigen Abschnitt mit einem horizontalen Steg 60, der an einer Unterseite des Oberbodens 20 anlegbar ist. An dem Steg 60 sind eine oder mehrere Öffnungen 61 ausgespart, insbesondere Langlöcher, um über Befestigungsmittel das Stützteil 6 an dem Oberboden 20 fixieren zu können. Ferner umfasst das Stützteil 6 einen in der montierten Position vertikalen Wandabschnitt 62, an dessen Unterseite zwei voneinander beabstandete Auflagestege 64 angeformt sind, zwischen denen eine Aufnahme zum Einfügen eines Abschnittes des Verbindungsteils 5 ausgebildet ist. An dem vertikalen Wandabschnitt 62 ist ferner eine Öffnung 63 zur Montage des Verbindungsteils 5 ausgebildet, die eine Schlüssellochform aufweist. Zudem ist ein umgebogener Steg 65 ausgebildet, der zur Justierung des Verbindungsteils 5 eingesetzt wird.

Das Verbindungsteil 5 umfasst einen oberen horizontalen Auflagesteg 50, der in der montierten Position auf dem Oberboden 20 aufliegt. Von dem Auflagesteg 50 erstreckt sich ein stegförmiger vertikaler Wandabschnitt 51 nach unten, an dem ein oder mehrere nach vorne hervorstehende Laufbahnabschnitte 52 ausgebildet sind. Jeder Laufbahnabschnitt 52 besitzt dabei im Wesentlichen dieselbe Geometrie wie eine Laufbahn 4 an der Laufschiene 3. In dem dargestellten Ausführungsbeispiel sind die Laufbahnen 4 und der Laufbahnabschnitt 52 im Querschnitt nach oben gekrümmt ausgebildet, aber auch andere Geometrien von Laufbahnen können vorgesehen werden.

An dem Laufbahnabschnitt 52 stehen seitlich an gegenüberliegenden Seiten Teile 53 hervor, die den Laufbahnabschnitt 52 zur Seite hin verlängern, wobei die Teile 53 in Ausklinkungen 33 oder Aufnahmen an der Laufbahn 4 einfügbar sind.

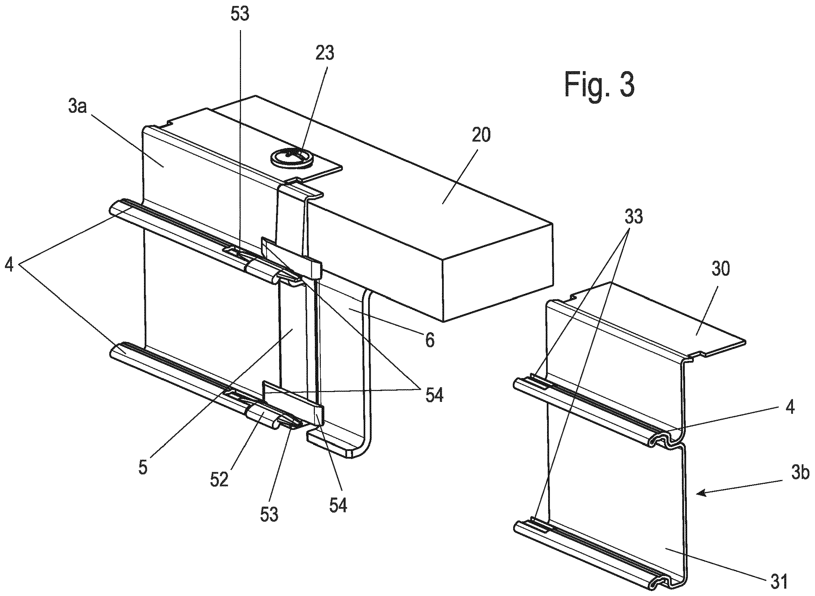

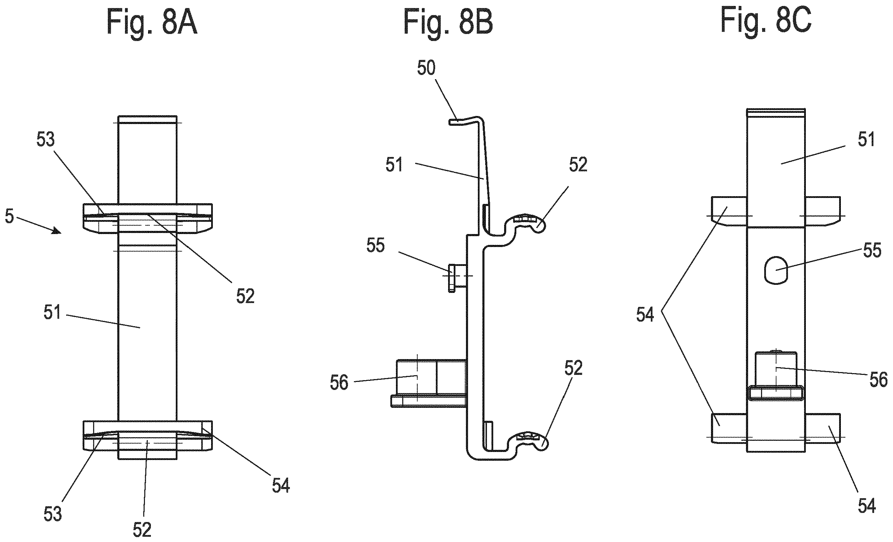

In der teilweise montierten Position (Figur 3) liegt ein hervorstehendes Teil 53 in der Ausklinkung 33 der Laufbahn 4 an, und das Teil 53 und die Laufbahn 4 bilden eine in einer Flucht liegende gemeinsame Oberfläche zur Führung einer Laufrolle aus. Wie insbesondere Figur 8A zeigt, setzt sich der Laufbahnabschnitt 52 aus zwei Teilen 53 mit einer rampenförmigen Kontur auf, die in Verlängerung hierzu einen im Wesentlichen linear ausgebildeten Abschnitt einbinden. Nach dem Einsetzen des Teils 53 in die Ausklinkung 33 befindet sich der dessen endseitiger Bereich in einer Höhenrichtung unterhalb des Höhenniveaus der Laufbahn 4. Infolge der rampenförmigen Kontur erfährt die Laufrolle beim Überfahren der Nahtstelle zwischen Laufbahn 4 und Teil 53 einen harmonischen Übergang, bevor sie bei Erreichen des linearen Abschnitts entweder im Wesentlichen auf der gleichen Höhe verbleibt wie beim Abrollen auf der Laufbahn 4 oder aber leicht angehoben wird, ohne dass ein Anwender dieses bemerkt.

An dem vertikalen Wandabschnitt 51 des Verbindungsteils 5 sind ferner seitliche Vorsprünge 54 ausgebildet, die in der montierten Position eine Vorderseite eines Schienenteils 3a oder 3b teilweise überdecken und somit die Ausrichtung des Verbindungsteils 5 relativ zu den Schienenteilen 3a und 3b erleichtern.

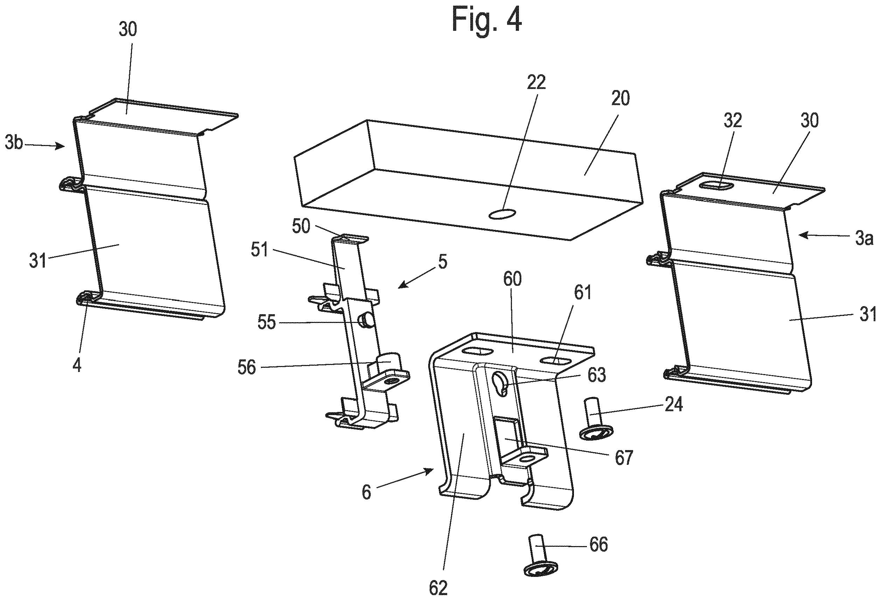

In Figur 4 ist der Schiebetürbeschlag von einer Innenseite des Möbelkorpus aus gezeigt, und es ist erkennbar, dass das Verbindungsteil 5 an dem vertikalen Wandabschnitt 51 an einer Rückseite einen hakenförmigen Vorsprung 55 aufweist, der in die schlüssellochförmige Öffnung 63 des Stützteils 6 einfügbar ist. Zudem ist ein optional vorgesehener rückseitiger Vorsprung 56 durch eine Öffnung 67 in dem vertikalen Wandabschnitt 62 des Stützteils 6 einfügbar. Hierbei umfasst der Vorsprung 56 einen horizontal ausgebildeten Steg sowie einen darauf aufgesetzten zylinderförmigen Körper.

Zur Montage eines Schienenteils 3a und des Stützteils 6 sind Befestigungsmittel in Form einer Gewindehülse 23 und einer Schraube 24 vorgesehen, die jeweils einen verbreiterten Kopfabschnitt für eine klemmende Festlegung aufweisen. Die Gewindehülse 23 wird durch die Öffnung 32 an dem Schienenteil 3a sowie die Öffnung 22 des Oberbodens 20 eingesteckt und die Schraube 24 von unten durch die Öffnung 61 in dem Stützteil 6 sowie in die Öffnung 22 des Oberbodens 20, um anschließend die Schraube 24 mit der Gewindehülse 23 zu verschrauben. Optional kann auch die Gewindehülse 23 an der Unterseite des Oberbodens 20 und die Schraube 24 von der Oberseite her eingesteckt werden, sofern an der Oberseite des Oberbodens 20 ausreichend Platz für die Montage ist. In jedem Fall sind durch die Gewindehülse 23 und die Schraube 24 sowohl das Stützteil 6 an der Unterseite des Oberbodens 20 als auch das Schienenteil 3a an der Oberseite des Oberbodens 20 klemmend fixiert. Das Schienenteil 3a umfasst einen oberen Auflagesteg 30 mit der Öffnung 32, insbesondere einem Langloch, und einen vertikalen Steg 31, an dem die Laufbahnen 4 hervorstehen. Die Schienenteile 3a und 3b können aus einem gebogenen Metallblech ausgebildet sein, aber auch eine Herstellung aus Aluminium oder einem anderen Material ist möglich. In dem Schienenteil 3b ist an dem Auflagesteg 30 keine Öffnung im Bereich des Stützteils 6 ausgebildet, sondern nur beabstandet hiervon, um das Schienenteil 3b an dem Oberboden 20 zu fixieren. Optional ist es natürlich möglich, auch an dem Schienenteil 3b eine Öffnung 32 vorzusehen, um das Stützteil 6 nicht nur mit einem Befestigungsmittel, sondern mit zwei beabstandeten Befestigungsmitteln an dem Oberboden 20 zu fixieren.

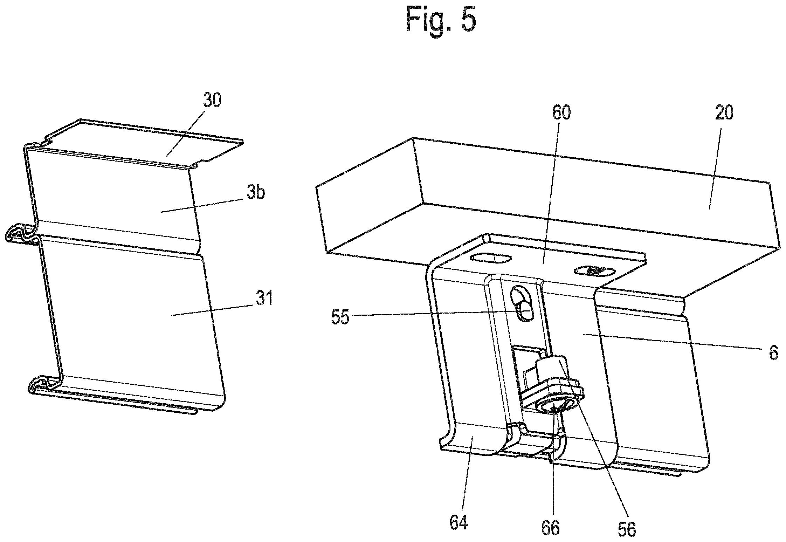

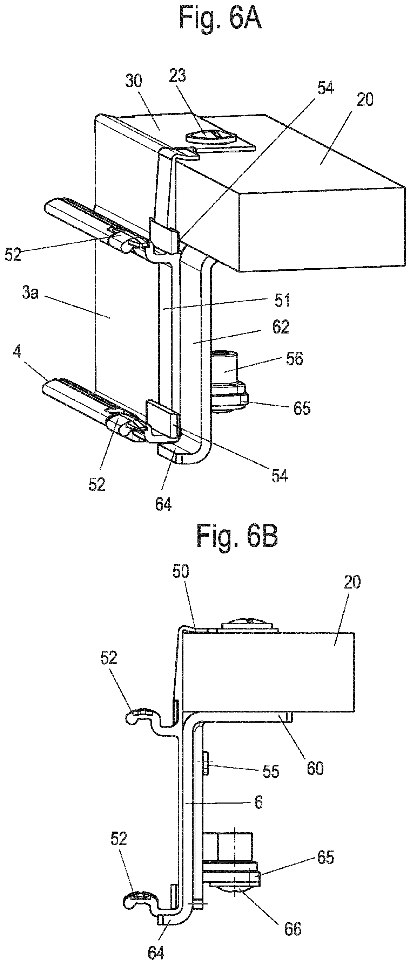

In den Figuren 5 und 6 ist der Schiebetürbeschlag in einer teilweise montierten Position gezeigt. Es ist erkennbar, dass der Laufbahnabschnitt 52 des Verbindungsteils 5 die Laufbahn 4 verlängert und fluchtend hierzu angeordnet ist. Zudem ist das Verbindungsteil 5 durch die seitlichen Vorsprünge 54 relativ zu den Schienenteilen 3a und 3b in einer Tiefenrichtung ausgerichtet. Das Stützteil 6 stützt mit den Auflagestegen 64 die untere Laufbahn 4 ab. Um ein Verschwenken des Schienenteils 3a um eine vordere Kante des Oberbodens 20 zu vermeiden, stützt das Stützteil 6 mit dem vertikalen Wandabschnitt 62 die beiden Schienenteile 3a und 3b auch im Bereich der vertikalen Stege 31 ab. In den Figuren 6A und 6B ist das Verbindungsteil 5 über den in die Öffnung 63 eingesteckten hakenförmigen Vorsprung 55 und den Vorsprung 56 an dem Stützteil 6 montiert. Der Vorsprung 56 liegt an dem Steg 65 dergestalt auf oder ist mittelbar auf diesem abgestützt, dass eine Öffnung am Steg 65 und der im Wesentlichen zylinderförmige Körper des Vorsprungs 56 fluchten.

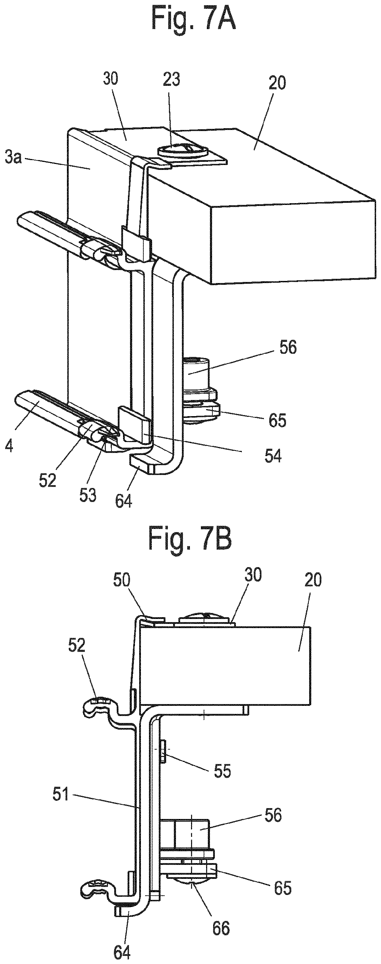

Um eine Höhenverstellung vorzunehmen, ist eine Schraube 66 vorgesehen, die an der Unterseite des Steges 65 in ein Gewinde eingeschraubt ist und den Vorsprung 56 über einen Anschlag anheben kann, wie dies in den Figuren 7A und 7B gezeigt ist. Dadurch bewegt sich das gesamte Verbindungsteil 5 nach oben, so dass der Laufbahnabschnitt 52 in vertikaler Richtung relativ zu den Laufbahnen 4 an den Schienenteilen 3a und 3b ausgerichtet werden kann. Die Verstellmechanik mit der Schraube 66, die in ein Innengewinde an dem Steg 65 eingreift und den Vorsprung 56 anhebt oder absenkt, kann natürlich auch abgewandelt werden. Beispielsweise können Abstandselemente zwischen dem Vorsprung 56 und dem Steg 65 für eine Höhenverstellung eingefügt werden. Als weitere Alternative für die Höhenverstellung kann die Schraube 66 mittels eines Lageransatzes und einem Sicherungselement drehbar an dem Steg 65 gelagert sein, wobei der Gewindeteil in den Vorsprung 56 eingreift und somit beim Verdrehen der Schraube 66 eine Höhenverstellung des Verbindungsteils 5 bewirkt wird.

Weitere Alternativen zur Höhenverstellung sind ebenfalls denkbar, wie z.B. die Verwendung einer im rechten Winkel zur Verstellrichtung angeordneten Exzenterverstellung.

In den Figuren 8A bis 8C ist das Verbindungsteil 5 im Detail gezeigt. Das Verbindungsteil 5 umfasst einen stegförmigen vertikalen Wandabschnitt 51, der in eine Aufnahme an dem Stützteil 6 einfügbar ist. Von diesem vertikalen Wandabschnitt 51 erstrecken sich zwei Laufbahnabschnitte 52 hervor, die jeweils seitlich ein hervorstehendes Teil 53 aufweisen. Die zuvor bereits beschriebene Kontur des Laufbahnabschnittes 52 ermöglicht es, dass auch bei einem Absenken des Laufbahnabschnittes 52 infolge einer Gewichtsbelastung das Überfahren kaum wahrgenommen wird. Es ist auch möglich, den Laufbahnabschnitt mit einer leichten Wölbung nach oben anstatt linear, auszubilden. Das Verbindungsteil 5 kann aus Kunststoff oder Metall hergestellt sein.

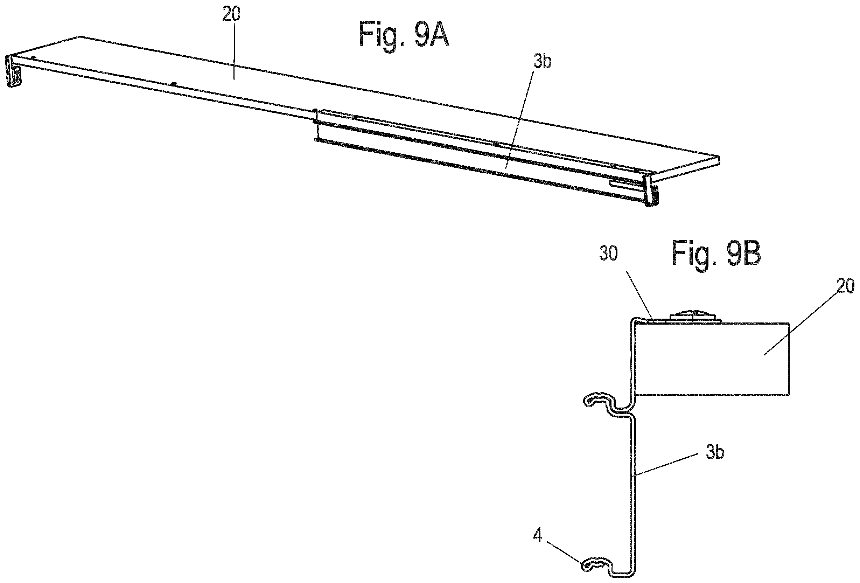

Nachfolgend wird die Montage des Schiebetürbeschlages an dem Oberboden 20 erläutert. In den Figuren 9A und 9B ist der Oberboden 20 gezeigt, an dem ein erstes Schienenteil 3b über Befestigungsmittel montiert ist, insbesondere Schrauben, die Öffnungen an dem Auflagesteg 30 durchgreifen. Das Schienenteil 3b wird einzeln montiert, also ohne Verbindung zu dem zweiten Schienenteil 3a.

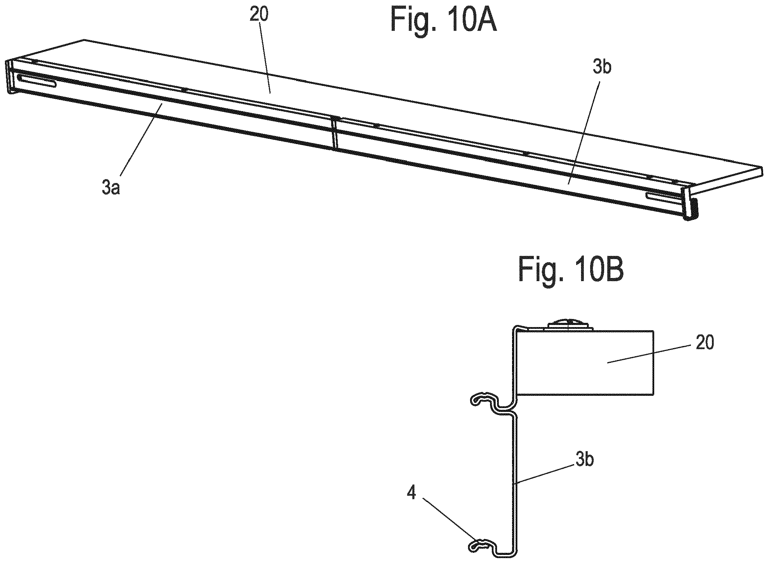

Das zweite Schienenteil 3a wird gemäß den Figuren 10A und 10B ebenfalls einzeln an dem Oberboden 20 über Befestigungsmittel, insbesondere Schrauben, fixiert, die in Öffnungen an dem Auflagesteg 30 eingefügt werden.

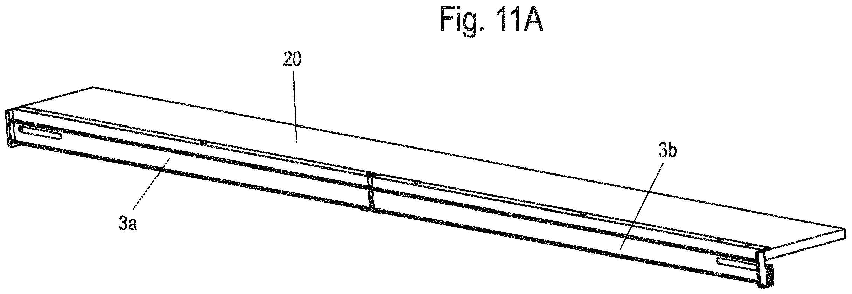

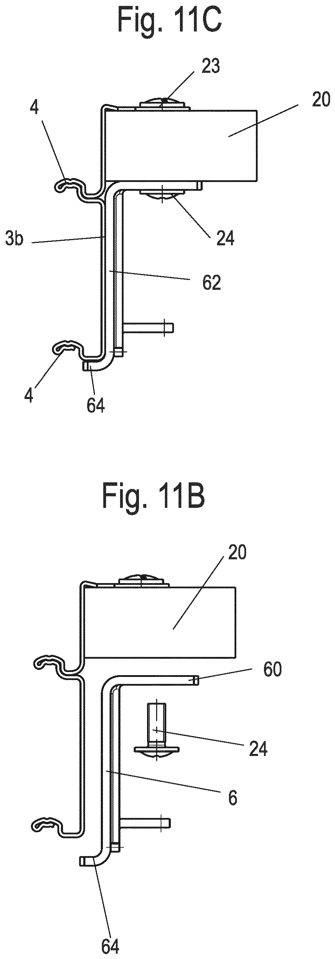

Ferner wird das Stützteil 6 an dem Oberboden 20 fixiert, wie dies in den Figuren 11A bis 11C gezeigt ist. Hierfür wird an der Oberseite des Oberbodens 20 eine Gewindehülse 23 in die Öffnung 32 des Schienenteils 3a eingesteckt, und von der Unterseite eine Schraube 24 in die Öffnung 61 an dem Steg 60 eingefügt, wobei unter Verschraubung der Schraube 24 an der Gewindehülse 23 sowohl das Schienenteil 3a als auch das Stützteil 6 an dem Oberboden 20 fixiert werden. Die Ausrichtung in Längsrichtung erfolgt wahlweise über einen Abstandshalter, der zwischen den Schienenteilen 3a und 3b eingefügt wird beziehungsweise an dem Stützteil 6 angeformt ist. Alternativ kann eine Markierung oder eine Skalierung an dem Stützteil 6 festgelegt sein, die dem Monteur anzeigt, in welchem Abstand die Schienenteile 3a und 3b zu montieren sind. Die Montagereihenfolge bezüglich des Schienenteils 3a, 3b und des Stützteils 6 ist unbeachtlich. Beispielsweise könnte das Stützteil 6 auch separat von den beiden Schienenteilen 3a und 3b durch ein Befestigungsmittel fixiert werden. Dann kann der Monteur frei wählen, welches Bauteil er zuerst und welches zuletzt montiert.

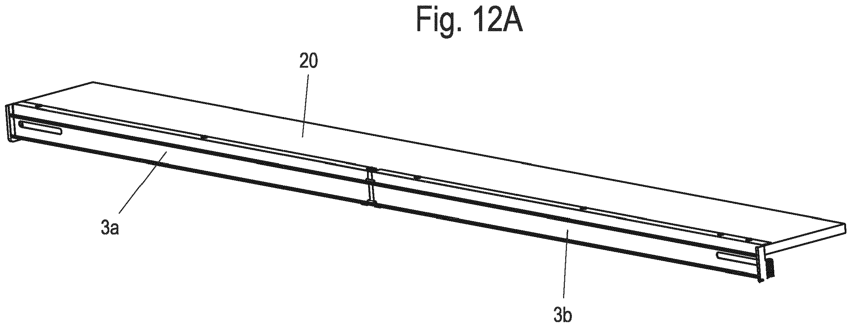

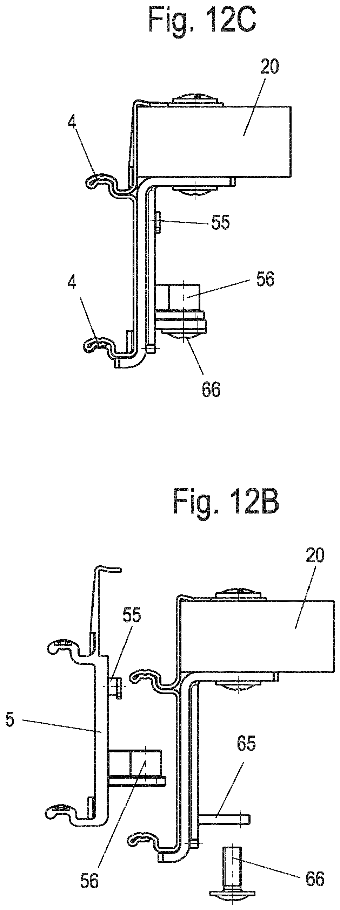

In jedem Fall wird bei der Montage das Verbindungsteil 5 am Schluss montiert, wie dies in den Figuren 12A bis 12C gezeigt ist. Das Verbindungsteil 5 wird durch eine Steckverbindung werkzeuglos montiert, wobei der hakenförmige Vorsprung 55 in die schlüssellochförmige Öffnung 63 eingefügt und dann abgesenkt wird. Dabei durchgreift der Vorsprung 56 die Öffnung 67 an dem vertikalen Wandabschnitt 62 und kann auf den Steg 65 aufgelegt werden. In einem letzten Schritt kann dann optional die Höhe des an dem Verbindungsteil 5 ausgebildeten Laufbahnabschnittes 52 über die Schraube 66 eingestellt werden, die in das Innengewinde des Steges 65 eingedreht wird und somit den Vorsprung 56 anheben kann. Es können natürlich auch andere Mechaniken zur Höhenverstellung eingesetzt werden, um das Verbindungsteil 5 relativ zu den Schienenteilen 3a und 3b auszurichten.

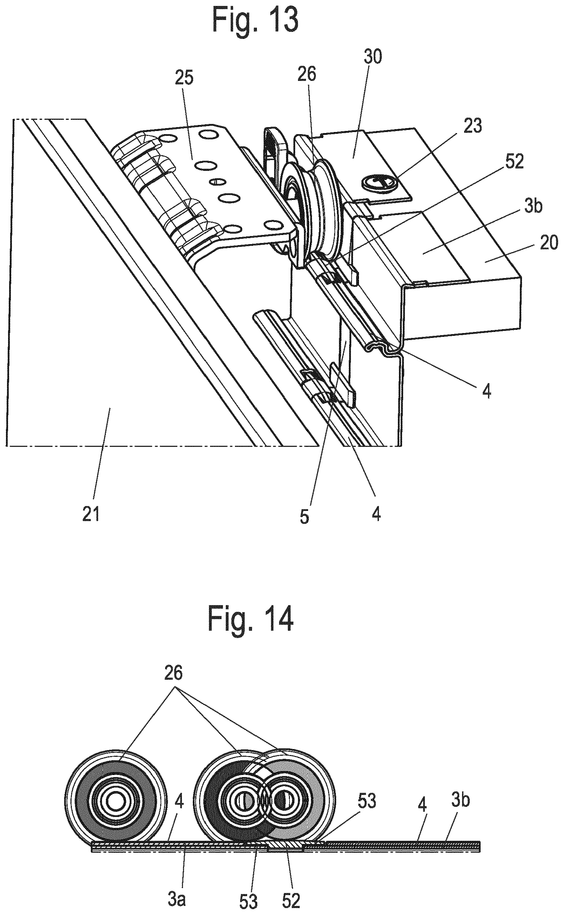

In Figur 13 ist der Schiebetürbeschlag in einer montierten Position gezeigt. Eine Schiebetür 21 hängt an einem oder mehreren Laufteilen 25, die mindestens jeweils eine drehbare Laufrolle 26 aufweisen, die entlang der Laufbahn 4 an der Laufschiene 3 verfahrbar ist. In dem Übergangsbereich zwischen den beiden Schienenteilen 3a und 3b ist die Laufbahn durch den Laufbahnabschnitt 52 des Verbindungsteils 5 gebildet.

Wie aus der Schnittansicht der Figur 14 ersichtlich ist, kann die Laufrolle 26 entlang der Laufbahn 4 verfahren werden. An dem Übergang zwischen den beiden Schienenteilen 3a und 3b ist der Laufbahnabschnitt 52 angeordnet, der einerseits den Spalt zwischen den beiden Schienenteilen 3a und 3b überbrückt und andererseits mit den hervorstehenden Teilen 53 in eine Ausklinkung oder Aufnahme an den Schienenteilen 3a und 3b eingefügt ist. Die Laufrolle 26 liegt beim Abrollen solange auf der eigentlichen Laufbahn 4 auf, bis sie die rampenförmige Kontur des Laufbahnabschnittes 52 mit demselben Höhenniveau erreicht hat. Ab diesem Zeitpunkt erfolgt das Abrollen der Laufrolle 26 auf dem Laufbahnabschnitt 52. Dabei verbleibt die Laufrolle 26 auf demselben Höhenniveau wie auf der eigentlichen Laufbahn 4 oder erfährt ein so geringes Anheben, das von dem Anwender nicht bemerkt werden kann.

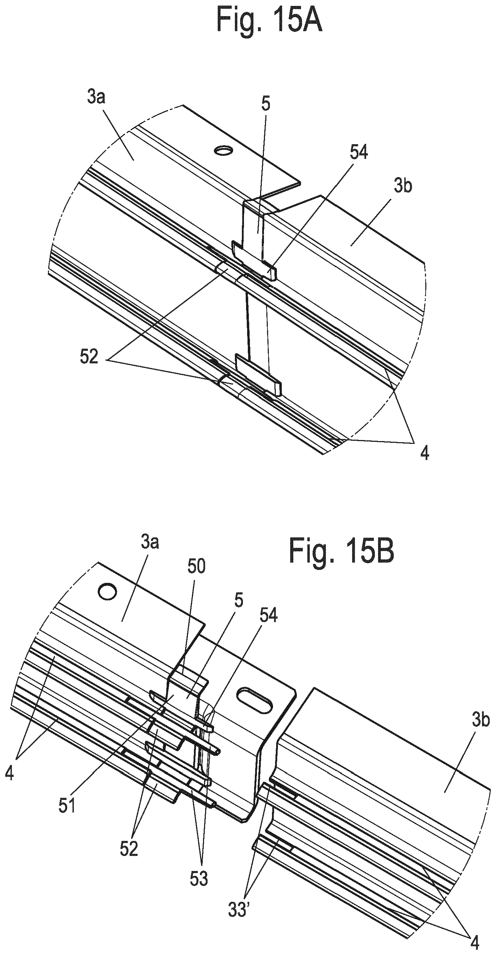

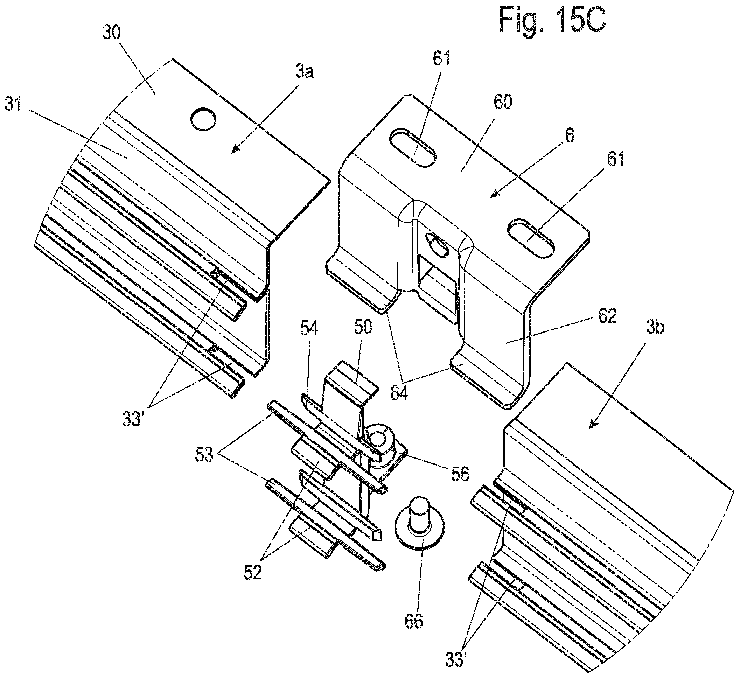

In den Figuren 15A bis 15C ist ein modifiziertes Ausführungsbeispiel eines Schiebetürbeschlages gezeigt, bei dem an den Schienenteilen 3a und 3b keine Ausklinkung, sondern eine durchgängige Aussparung 33' ausgebildet ist, die die Laufbahn 4 vollständig durchgreift. Das hervorstehende Teil 53 an dem Verbindungsteil 5 ist in die Aussparung 33' eingefügt, und das Verbindungsteil 5 kann nun besser in vertikaler Richtung ausgerichtet werden, um einen exakten Übergang zwischen einem Schienenteil 3a oder 3b und dem Verbindungsteil 5 im Bereich der Laufbahn und des Laufbahnabschnittes 52 herzustellen. Im Übrigen entspricht dieses Ausführungsbeispiel dem vorangegangenen Ausführungsbeispiel im Hinblick auf die Ausbildung des Profilstoßverbinders mit dem Stützteil 6 und dem Verbindungsteil 5.

### Bezugszeichenliste

- 1: Möbel
- 2: Möbelkorpus
- 3: Laufschiene
- 3a, 3b: Schienenteil
- 4: Laufbahn
- 5: Verbindungsteil
- 6: Stützteil
- 15: Führungsschiene
- 20: Oberboden
- 21: Schiebetür
- 22: Öffnung
- 23: Gewindehülse
- 24: Schraube
- 25: Laufteil
- 26: Laufrolle
- 30: Auflagesteg
- 31: Steg
- 32: Öffnung
- 33: Ausklinkung
- 33': Aussparung
- 50: Auflagesteg
- 51: Wandabschnitt
- 52: Laufbahnabschnitt
- 53: Teil
- 54: Vorsprung
- 55: Vorsprung
- 56: Vorsprung
- 60: Steg
- 61: Öffnung
- 62: Wandabschnitt
- 63: Öffnung
- 64: Auflagesteg
- 65: Steg
- 66: Schraube
- 67: Öffnung

## Patentansprüche

1. Schiebetürbeschlag mit einer aus mindestens zwei Schienenteilen (3a, 3b) gebildeten Laufschiene (3), an der mindestens eine Laufbahn (4) für eine Laufrolle (23) eines Laufteils (25) zum Verfahren einer Schiebetür (21) ausgebildet ist, wobei zwischen den Schienenteilen (3a, 3b) ein Profilstoßverbinder mit einem Verbindungsteil (5) angeordnet ist, das einen Laufbahnabschnitt (52) für die Laufrolle (23) ausbildet, **dadurch gekennzeichnet, dass** der Profilstoßverbinder ein an einem Oberboden (20) festlegbares Stützteil (6) aufweist, das die beiden Schienenteile (3a, 3b) an ihrem einander zugewandten Ende stützt und an dem das Verbindungsteil (5) fixiert ist.

2. Schiebetürbeschlag nach Anspruch 1, **dadurch gekennzeichnet, dass** das Verbindungsteil (5) über eine Steckverbindung an dem Stützteil (6) durch Einschieben, Einschwenken oder Einhängen fixiert ist.

3. Schiebetürbeschlag nach Anspruch 1 oder 2, **dadurch gekennzeichnet, dass** das Stützteil (6) zwei beabstandete Auflageflächen (62, 64) aufweist und an jeder Auflagefläche (62, 64) ein Schienenteil (3a, 3b) abgestützt ist.

4. Schiebetürbeschlag nach einem der vorhergehenden Ansprüche, **dadurch gekennzeichnet, dass** das Verbindungsteil (5) einen Spalt zwischen den beiden Schienenteilen (3a, 3b) mit den Laufbahnabschnitten (52) überbrückt, der in Verlängerung der Laufbahn (4) an den Schienenteilen (3a, 3b) angeordnet ist.

5. Schiebetürbeschlag nach einem der vorhergehenden Ansprüche, **dadurch gekennzeichnet, dass** an mindestens einem Schienenteil (3a, 3b) eine Aussparung (33') oder Ausklinkung (33) ausgebildet ist, in die ein hervorstehendes Teil (53) an dem Laufbahnabschnitt (52) des Verbindungsteils (5) eingefügt ist.

6. Schiebetürbeschlag nach einem der vorhergehenden Ansprüche, **dadurch gekennzeichnet, dass** der Laufbahnabschnitt (52) des Verbindungsteils (5) den Spalt zwischen den Laufbahnen (4) der beiden Schienenteile (3a, 3b) fluchtend in Verlängerung der Laufbahn (4) überbrückt.

7. Schiebetürbeschlag nach einem der vorhergehenden Ansprüche, **dadurch gekennzeichnet, dass** das Verbindungsteil (5) mindestens einen seitlichen Vorsprung (54) aufweist, der ein Schienenteil (3a, 3b) an einem vertikalen Wandabschnitt (31) zumindest teilweise überdeckt.

8. Schiebetürbeschlag nach einem der vorhergehenden Ansprüche, **dadurch gekennzeichnet, dass** das Stützteil (6) über Befestigungsmittel (23, 24) an zumindest einem Schienenteil (3a, 3b) fixiert ist.

9. Schiebetürbeschlag nach einem der vorhergehenden Ansprüche, **dadurch gekennzeichnet, dass** die Schienenteile (3a, 3b) zwei Laufbahnen (4) aufweisen, die in der montierten Position vertikal versetzt zueinander angeordnet sind.

10. Schiebetürbeschlag nach einem der vorhergehenden Ansprüche, **dadurch gekennzeichnet, dass** das Stützteil (6) einen in der montierten Position vertikalen Wandabschnitt (62) aufweist, an dem ein vertikaler Abschnitt (31) jedes Schienenteils (3a, 3b) anliegt.

11. Schiebetürbeschlag nach einem der vorhergehenden Ansprüche, **dadurch gekennzeichnet, dass** an dem Stützteil (6) eine Markierung oder ein Abstandshalter vorgesehen ist, um die Schienenteile (3a, 3b) in einem vorbestimmten Abstand voneinander zu montieren.

12. Schiebetürbeschlag nach einem der vorhergehenden Ansprüche, **dadurch gekennzeichnet, dass** das Verbindungsteil (5) höhenverstellbar an dem Stützteil (6) montiert ist.

13. Möbel (1) mit einem Möbelkorpus (2), an dem an einem Oberboden (20) ein Schiebetürbeschlag nach einem der vorhergehenden Ansprüche montiert ist.

14. Möbel nach Anspruch 13, **dadurch gekennzeichnet, dass** der Oberboden (20) eine Öffnung (22) aufweist, in die eine Gewindehülse (23) eingesteckt ist und in die Gewindehülse (23) eine Schraube (24) eingeschraubt ist, über die das Stützteil (6) an einer Oberseite oder Unterseite des Oberbodens (20) fixiert ist.

15. Möbel nach Anspruch 14, **dadurch gekennzeichnet, dass** zumindest ein Schienenteil (3a) über die Gewindehülse (23) und die Schraube (24) an einer Oberseite des Oberbodens (20) fixiert ist.

16. Verfahren zur Montage eines Schiebetürbeschlages an einem Oberboden (20), mit den folgenden Schritten:
- Fixieren eines ersten Schienenteils (3b) an einem Oberboden (20);
- Fixieren eines zweiten Schienenteils (3a) an einem Oberboden (20);
- Fixieren eines Stützteils (6) eines Profilstoßverbinders zwischen den beiden Schienenteilen (3a, 3b) an dem Oberboden (20), und
- Einschieben, Einschwenken oder Einhängen eines Verbindungsteils (5) an dem Stützteil (6) zur Ausbildung einer durchgängigen Laufbahn (4) für eine Laufrolle (23) zwischen den beiden Schienenteilen (3a, 3b).

## Claims

1. Sliding-door fitting having a running rail (3) which is formed from at least two rail parts (3a, 3b) and on which at least one track (4) is formed for a running roller (26) of a running part (25) for moving a sliding door (21), a profile butt connector having a connection part (5), arranged between the rail parts (3a, 3b), which forms a track section (52) for the running roller (26), **characterized in that** the profile butt connector has a support part (6) which can be fixed to a top panel (20) and supports the two rail parts (3a, 3b) at their ends facing one another and to which the connection part (5) is fixed.

2. Sliding door fitting according to claim 1, **characterized in that** the connection part (5) is fixed to the support part (6) via a plug-in connection by being pushed in, swiveled in or swung in.

3. Sliding door fitting according to claim 1 or 2, **characterized in that** the support part (6) has two spaced-apart support surfaces (62, 64) and a rail part (3a, 3b) is supported on each support surface (62, 64).

4. Sliding door fitting according to one of the preceding claims, **characterized in that** the connection part (5) bridges a gap between the two rail parts (3a, 3b) with the track sections (52), which is arranged in extension of the track (4) on the rail parts (3a, 3b).

5. A sliding door fitting according to any one of the preceding claims, **characterized in that** a recess (33') or notch (33) is formed on at least one rail part (3a, 3b), into which a protruding part (53) is inserted on the track section (52) of the connection part (5).

6. Sliding door fitting according to one of the preceding claims, **characterized in that** the track section (52) of the connection part (5) bridges the gap between the tracks (4) of the two rail parts (3a, 3b) in alignment in extension of the track (4).

7. Sliding door fitting according to one of the preceding claims, **characterized in that** the connection part (5) has at least one lateral protrusion (54) which at least partially covers a vertical wall section (31) of a rail part (3a, 3b).

8. Sliding door fitting according to one of the preceding claims, **characterized in that** the support part (6) is fixed to at least one rail part (3a, 3b) via fixing means (23, 24).

9. Sliding door fitting according to one of the preceding claims, **characterized in that** the rail parts (3a, 3b) have two tracks (4) which are vertically offset from each other in the assembled position.

10. A sliding door fitting according to any one of the preceding claims, **characterized in that** the support part (6) has a wall section (62) which is vertical in the assembled position and against which a vertical wall section (31) of each rail part (3a, 3b) abuts.

11. Sliding door fitting according to one of the preceding claims, **characterized in that** a marking or spacer is provided on the support part (6) for mounting the rail parts (3a, 3b) at a predetermined distance from each other.

12. Sliding door fitting according to one of the preceding claims, **characterized in that** the connection part (5) is mounted on the support part (6) in a height-adjustable manner.

13. Piece of furniture (1) with a furniture body (2), on which a sliding door fitting according to one of the preceding claims is mounted on a top panel (20).

14. Piece of furniture according to claim 13, **characterized in that** the top panel (20) has an opening (22) into which a threaded sleeve (23) is inserted and a screw (24) is screwed into the threaded sleeve (23), which fixes the support part (6) to an upper side or under side of the top panel (20).

15. Piece of furniture according to claim 14, **characterized in that** at least one rail part (3a) is fixed to an upper side of the top panel (20) via the threaded sleeve (23) and the screw (24).

16. A method of assembly of a sliding door fitting to a top panel (20), comprising the following steps:
- fixing a first rail part (3b) to a top panel (20);
- fixing a second rail part (3a) to a top panel (20);
- fixing a support part (6) of a profile butt connector between the two rail parts (3a, 3b) to the top panel (20), and
- pushing, swiveling or hooking in of a connection part (5) on the support part (6) to form a continuous running track (4) for a running roller (26) between the two rail parts (3a, 3b).

## Revendications

1. Ferrure de porte coulissante avec un rail de roulement (3) qui est formé d'au moins deux parties de rail (3a, 3b) et sur lequel est formée au moins un rail (4) pour un galet de roulement (26) d'une partie de roulement (25) pour le déplacement d'une porte coulissante (21), un raccord de profilé en bout comportant une partie de raccordement (5), disposé entre les parties de rail (3a, 3b), qui forme une section de rail (52) pour le galet de roulement (26), **caractérisé en ce que** le raccord bout à bout profilé présente une partie de support (6) pouvant être fixée sur un panneau supérieur (20), qui supporte les deux parties de rail (3a, 3b) à leurs extrémités tournées l'une vers l'autre, sur lesquelles est fixée la partie de raccordement (5).

2. Ferrure de porte coulissante selon la revendication 1, **caractérisée en ce que** la partie de raccordement (5) est fixée à la partie de support (6) par une liaison par enfichage en étant enfoncée, pivotée ou basculée.

3. Ferrure de porte coulissante selon la revendication 1 ou 2, **caractérisée en ce que** la partie de support (6) a deux surfaces de support espacées (62, 64) et une partie de rail (3a, 3b) est supportée sur chaque surface de support (62, 64).

4. Ferrure de porte coulissante selon l'une des revendications précédentes, **caractérisée en ce que** la partie de raccordement (5) ponte un espace entre les deux parties de rail (3a, 3b) avec les sections de rail (52), qui est disposée dans le prolongement du rail (4) sur les parties de rail (3a, 3b).

5. Ferrure de porte coulissante selon l'une quelconque des revendications précédentes, **caractérisée en ce qu'un** évidement (33') ou une encoche (33) est formé sur au moins une partie de rail (3a, 3b), dans lequel une partie saillante (53) est insérée sur la section de rail (52) de la partie de raccordement (5).

6. Ferrure de porte coulissante selon l'une des revendications précédentes, **caractérisée en ce que** la section de rail (52) de la partie de raccordement (5) comble l'espace entre les rails (4) des deux parties de rail (3a, 3b) alignées dans le prolongement du rail (4).

7. Ferrure de porte coulissante selon l'une des revendications précédentes, **caractérisée en ce que** la partie de raccordement (5) présente au moins une saillie latérale (54) qui recouvre au moins partiellement une section de paroi verticale (31) d'une partie de rail (3a, 3b).

8. Ferrure de porte coulissante selon l'une des revendications précédentes, **caractérisée en ce que** la partie support (6) est fixée à au moins une partie de rail (3a, 3b) par des moyens de fixation (23, 24).

9. Ferrure de porte coulissante selon l'une des revendications précédentes, **caractérisée en ce que** les parties de rail (3a, 3b) présentent deux voies (4) décalées verticalement l'une par rapport à l'autre en position montée.

10. Ferrure de porte coulissante selon l'une quelconque des revendications précédentes, **caractérisée en ce que** la partie support (6) présente un tronçon de paroi (62) vertical en position montée, contre lequel vient en appui un tronçon de paroi vertical (31) de chaque partie de rail (3a, 3b).

11. Ferrure de porte coulissante selon l'une des revendications précédentes, **caractérisée en ce qu'un** marquage ou une entretoise est prévu sur la partie support (6) pour monter les parties de rail (3a, 3b) à une distance prédéterminée l'une de l'autre.

12. Ferrure de porte coulissante selon l'une des revendications précédentes, **caractérisée en ce que** la partie de raccordement (5) est montée sur la partie support (6) de manière réglable en hauteur.

13. Meuble (1) comportant un corps de meuble (2), sur lequel est montée une ferrure de porte coulissante selon l'une des revendications précédentes sur un panneau supérieur (20).

14. Meuble selon la revendication 13, **caractérisé en ce que** le panneau supérieur (20) présente une ouverture (22) dans laquelle est insérée une douille filetée (23) et une vis (24) est vissée dans la douille filetée (23), qui fixe la partie de support (6) sur un côté supérieur ou un côté inférieur du panneau supérieur (20).

15. Meuble selon la revendication 14, **caractérisé en ce qu'au** moins une partie de rail (3a) est fixée à un côté supérieur du panneau supérieur (20) par l'intermédiaire de la douille manchon fileté (23) et de la vis (24).

16. Procédé d'assemblage d'une ferrure de porte coulissante sur un panneau supérieur (20), comprenant les étapes suivantes :
- fixer une première partie de rail (3b) à un panneau supérieur (20) ;
- fixer une deuxième partie de rail (3a) à un panneau supérieur (20) ;
- fixer une partie de support (6) d'un connecteur bout à bout profilé entre les deux parties de rail (3a, 3b) au panneau supérieur (20), et
- la poussée, le pivotement ou l'accrochage d'une partie de raccordement (5) sur la partie de support (6) pour former une voie de roulement continue (4) pour un galet de roulement (26) entre les deux parties de rail (3a, 3b).
